# EUROPEAN PATENT APPLICATION

(11) **EP 4 819 593 A1**
(43) Date of publication of application: **07.10.2026**
(21) Application number: 26163783.9
(22) Date of filing: 10.03.2026
(51) Int. Cl.: H04M 1/72412, H04M 1/72457, H04M 3/42, H04W 4/02

(54) **METHOD AND SYSTEM TO DETERMINE PREFERRED LANGUAGE TO SET UP AN ELECTRONIC DEVICE**

(30) Priority: 03.04.2025 US 202519169233
(71) Applicant: Puwell Technology LLC, New York, NY 10001 (US)
(72) Inventor: LI, Jie, New York, 10001 (US)
(74) Representative: WP Thompson

(57) **Abstract**

The disclosed embodiments methods, systems, computer programs, and storage medium to determine the preferred language to set up an electronic device. In one embodiment, a method includes upon powering on an electronic device, determining a physical territory in which the electronic device resides based on a first message received by the electronic device in a communications technology within a set of communications technologies that the electronic device supports; selecting a preferred language based on the physical territory to set up the electronic device by an operator of the electronic device; and providing one or more prompts in the preferred language to guide the operator to set up the electronic device.

## Description

### TECHNICAL FIELD

Embodiments disclosed herein relate to determining the preferred language to set up an electronic device.

### BACKGROUND ART

In the ultra-connected world today, many electronic devices need to be set up to connect with a network upon being powered up. For example, a new smartphone, once powered on, needs to be set up by a user. Setting up the smartphone involves interactions between the user and the phone, where the latter provides prompts in a variety of languages for the former to select, and the selected language is then used to guide the setup process.

For example, when an iPhone is first powered on, it provides over 40 language options on the initial setup screen, covering major global languages, including English, Spanish, French, Chinese (Simplified and Traditional), German, Japanese, Korean, Russian, Arabic, Portuguese, Italian, Hindi, Duch, Turkish, Hebrew. An android phone offers even more language options at the initial setup screen, up to 80 to 100 languages. Scrolling through the tens of language options is tedious to the user and drains the user's enthusiasm at the very first interaction with an electronic device.

### SUMMARY

The disclosed embodiments methods, systems, computer programs, and storage medium provide ways to automatically determine the preferred language to set up an electronic device. In one embodiment, a method includes upon powering on an electronic device, determining a physical territory in which the electronic device resides based on a first message received by the electronic device in a communications technology within a set of communications technologies that the electronic device supports; selecting a preferred language based on the physical territory to set up the electronic device by an operator of the electronic device; and providing one or more prompts in the preferred language to guide the operator to set up the electronic device.

The disclosed embodiments include electronic devices to determine the preferred language to set up themselves. In one embodiment, an electronic device comprises a processor and machine-readable storage medium that provides instructions that, when executed by the processor, are capable of causing the processor to perform upon powering on an electronic device, determining a physical territory in which the electronic device resides based on a first message received by the electronic device in a communications technology within a set of communications technologies that the electronic device supports; selecting a preferred language based on the physical territory to set up the electronic device by an operator of the electronic device; and providing one or more prompts in the preferred language to guide the operator to set up the electronic device.

The disclosed embodiments include machine-readable storage media to determine the preferred language to set up an electronic device. In one embodiment, a machine-readable storage medium provides instructions that, when executed, are capable of causing the processor to perform: upon powering on an electronic device, determining a physical territory in which the electronic device resides based on a first message received by the electronic device in a communications technology within a set of communications technologies that the electronic device supports; selecting a preferred language based on the physical territory to set up the electronic device by an operator of the electronic device; and providing one or more prompts in the preferred language to guide the operator to set up the electronic device.

The disclosed embodiments automatically select the preferred language for an operator of an electronic device to interact with the electronic device without the operator to manually select a language from numerous language options. Such automatic language selection provides the operator with a smooth user experience and makes interactions with the electronic device effortless.

### BRIEF DESCRIPTION OF THE DRAWINGS

The disclosed embodiments may best be understood by referring to the following description and accompanying drawings that are used to illustrate these embodiments. In the drawings:
**Figure 1** illustrates automatic language selection by an electronic device without manual input per some embodiments.
**Figure 2** illustrates exemplary wireless communications technologies and the embedded territory information per some embodiments.
**Figure 3** illustrates the flow of setting up an electronic device with an automatically selected language per some embodiments.
**Figure 4** is a flow diagram illustrating the operations of automatic language selection by an electronic device without manual input per some embodiments.
**Figure 5** is a block diagram illustrating an electronic device that may implement automatic language selection per some embodiments.

### DETAILED DESCRIPTION

In the following description, numerous specific details such as logic implementations, resource partitioning/sharing/duplication implementations, types and interrelationships of system components, and logic partitioning/integration choices are set forth in order to provide a more thorough understanding of the present disclosure. It will be appreciated, however, by one skilled in the art that these embodiments may be practiced without such specific details. In other instances, control structures, gate level circuits, and full software instruction sequences have not been shown in detail in order not to obscure the disclosed embodiments.

Bracketed text and blocks with dashed borders (e.g., large dashes, small dashes, dot-dash, and dots) may be used herein to illustrate optional operations or components that add additional features to the disclosed embodiments. However, such notation should not be taken to mean that these are the only options or optional operations, and/or that blocks with solid borders are not optional in certain embodiments.

### Language selection system

Electronic devices often need to be set up prior to being operational. For example, once an electronic device is powered on, an operator of the electronic device may select the preferred language and the current location, and the operator may additionally instruct the electronic device to connect with an available network. When authentication is needed, the operator provides the required information to the electronic device. After a connection is established, the operator may then sign in or create an account with a service provider and select security/privacy settings to register with the service provider regarding the session on the electronic device. The setup may further include selecting services and corresponding user preferences.

Once the operator selects the preferred language, all the prompts for connecting, signing in, account creating, security/privacy setting, and registration are provided in the preferred language so that the operator may easily interact with the electronic device. Yet asking the operator to manually select the preferred language often involves the operator scroll through language options screen after screen, and that does not provide the best initial user experience and contradicts with the plug-and-play goal that many electronic devices are targeting.

It is preferrable if an electronic device can automatically select the preferred language to set up the electronic device without any manual input from an operator. The resulting prompts in the preferred language to set up the electronic device, if delivered right after the power-on, will give the operator the impression that the electronic device has intelligence and knows the operator, and that makes the setup and following interactions between the operator and the electronic device much more enjoyable. The disclosed embodiments implement the automatic preferred language selection without human input.

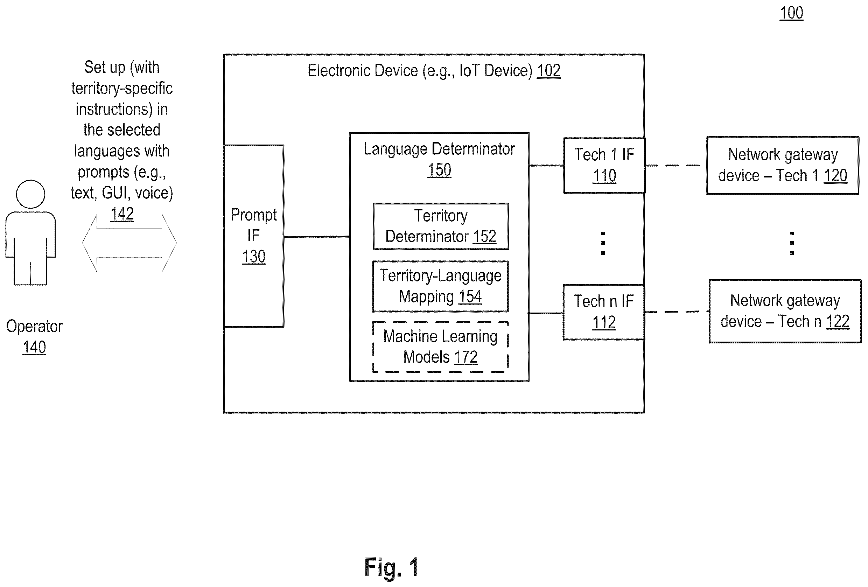

**Figure 1** illustrates automatic language selection by an electronic device without manual input per some embodiments. System 100 includes an operator 140, an electronic device 102, network gateway device 120 that provides network connection with the first communications technology, and network gateway device 122 that provide network connection with the *n*^{th} communications technology (the gateway devices with other communications technologies are omitted in the figure).

The communications technologies used by the network gateway devices may be wireline communications technologies through fiber optic, coaxial cable, Ethernet cable, twisted lines, power lines, or other links.

The communications technologies used by the network gateway devices may also be wireless communication technologies through a variety of radio or microwave frequency bands. These wireless communication technologies may operate in short-range (10 to 100 meters), long-range (1 to 10 km), or even longer in some embodiments.

Electronic device 102 is to be configured by an operator 140. While operator 140 is a human in some embodiments, operator 140 may be a machine or another being in alternative embodiments, as long as operator 140 sets up electronic device 102 based on the prompts provided by electronic device 102.

Electronic device 102 may be a workstations, a laptop computer, a netbook, a tablet, a palm top, a mobile phones, a smartphone, a phablet, a multimedia phone, a Voice Over Internet Protocol (VOIP) phone, a terminal, a portable media player, a Global Positioning System (GPS) unit, a wearable device, a gaming system, a set-top box, an Internet of Things (IoT) device, or another type of electronic devices that interacts with operator 140.

An IoT device is an electronic device embedded with sensors, software, and other technologies that enable it to collect, transmit, and exchange data over the internet or other communication networks. These IoT devices may operate autonomously or interact with other systems and can be found in various sectors, including smart homes, healthcare, entertainment, manufacturing, and transportation. For example, the IoT devices may be smart speakers with voice-control for managing home automation, smart displays with touchscreen-enablement/voice control, video doorbells with motion-activated cameras with two-way audio, smart security cameras with AI-powered indoor/outdoor surveillance cameras, smart door locks with keyless entry systems and remote control, smart lightning bulbs with Wi-Fi/Bluetooth-enabled color/brightness control, smart light switches with voice remote control, smart thermostats with AI-driven climate control, smart appliances (refrigerators/robotic vacuums, washing machines) with Internet connection and remote control. These IoT devices are examples only, and the disclosed embodiments may be used to set up these and other electronic devices.

Electronic device 102 supports multiple communications technologies. As shown, Electronic device 102 may communicate with one or more of network gateway devices 120 to 122 through interfaces 110 to 112, respectively, each of which may be a wireline interface or wireless interface used to communicate with a corresponding wireline communications technology or wireless communications technology, respectively. For example, once electronic device 102 is powered on, a wireless interface is activated and monitors the corresponding frequency band in which the wireless communications technology operates, once an advertisement/pairing signal is received, electronic device 102 may establish a connection with the corresponding network gateway device to activate a session. In some embodiments, electronic device 102 sends out connecting/pairing requests upon power-on, and network gateway devices send out advertisement/pairing signals responsively.

In some embodiments, language determinator 150 determines one or more preferred languages to be used to interact with operator 140 based on the signaling with the network gateway devices. Electronic device 102 includes territory determinator 152, which examines the signals from the network gateway devices as they provide hints about the physical territory in which electronic device 102 resides. For example, a network gateway device may send radio or microwave signals in a particular frequency band that is allocated to a particular region (e.g., Europe or North America) with code indicating the signal originating country (e.g., the US or Australia) or the signal originating service provider (e.g., British Telecom (BT) group or Deutsche Telekom that provide internet services). The frequency band and code, singly or in combination, indicate the physical territory of the network gateway device. Since the network gateway devices are physically close to electronic device 102 (e.g., within meters or kilometers), electronic device 102 likely resides in the determined physical territory.

The term territory may indicate a physical region large or small on earth. For example, a territory as indicated by signals from a network gateway device may be a continent (e.g., Europe, North/South America), a country, a province, a city, a region within a province, a community, or an area where a particular language is preferred due to cultural and/or political history or other factors.

A territory-language mapping module 154 determines one or more preferred languages to set up electronic device 102 based on the determined physical territory. A number of languages may be spoken or written in a physical territory. For example, Canada has two official languages: English and French, and if the narrowest physical territory as determined is the country, both languages should be used in the prompts to operator 140. Yet if the narrowest physical territory as determined is the province of Quebec, French may be chosen as the preferred language as it is the predominant language in the province. Additionally, other than the official languages, some indigenous languages are spoken in some pockets within a physical territory, and these indigenous languages may be selected as the preferred languages. For example, the Cree Nation of Quebec in the province of Quebec speaks Cree, an indigenous language, which can be chosen as the preferred language if the narrowest physical territory as determined is the one governed by the Cree Nation.

Note that the language selection disclosed herein may include selecting a dialect that is a variation of a language that is spoken by a particular group of people, often based on region, culture, or social background. For example, if the physical territory is determined to be Hong Kong, the selected language may be Cantonese, which is a dialect developed in southern China and differs from Mandarin Chinese spoken in the rest of China. The voice prompts to operator 140 may be provided in Cantonese instead of Mandarin Chinese, even though the predominant speaking language in China is the latter.

Different signals from the network gateway devices may provide different indications of the physical territory, and the indicated physical territory has different scopes. For example, some signals may hint a large territory, e.g., continent or country, while others indicate a smaller one, e.g., a service area by a service provider. These indications may contradict each other, and different weights may be given to these indications for making the territory determination. Territory-language mapping module 154 makes the determination of the territory and/or the preferred one or more languages with the aid of machine learning models 172 in some embodiments.

Machine learning models 172 may use supervised learning, unsupervised learning, semi-supervised learning, or other types of learning. They can use reinforcement learning (RL), artificial neural networks (e.g., Generative Adversarial Networks (GANs), transformers, large language models (LLMs), and variational autoencoders), decision trees, support-vector machines, regression analysis, Bayesian networks, genetic algorithms, diffusion models, or any other framework. Machine learning models 172 may be trained with one or more goals (e.g., maximizing the reward scores) to set parameters of the machine learning models so that trained machine learning models may be used to select the best language for the prompts to operator 140.

Once the one or more preferred languages are selected, they are used by prompt interface 130. Prompt interface 130 includes logic/circuitry to provide one or more prompts in the preferred languages to interact with operator 140 to guide operator 140 to set up and/or configure electronic device 102. Prompt interface 130 may provide text messages, or graphics on a display (e.g., a graphic user interface (GUI)) or a voice through a speaker in the preferred languages. When more than one language is selected as the preferred language, a prompt may be generated in a first selected language followed by one in a second selected language and so on.

At reference 142, operator 140 sets up electronic device 102 in the selected one or more languages. Once operator 140 responds to the prompts with a language, that language is used in the following prompts. In some embodiments, once electronic device 102 recognizes that the response from operator 140 is not in the selected languages, electronic device 102 may reset its language selection and provide default all language options through prompt interface 130 to allow operator 140 to select. Alternatively, electronic device 102 may examine the response from operator 140 and determine the language used and adjust the subsequent prompts to that language. For example, if the response is spoken words captured by a microphone of electronic device 102, electronic device 102 may determine the language of the spoken words and adjust the preferred language to be used through prompt interface 130 accordingly.

In some embodiments, based on the territory determinations, specific instructions are given to compliance with laws/regulations for the particular determined territory. For example, various jurisdictions have numerous laws and regulations to be complied with regarding personal data, including General Data Protection Regulation (GDPR) in Europe, California Consumer Privacy Act (CCPA), Payment Card Industry Data Security Standard (PCI DSS), Japan's Act on the Protection of Personal Information (APPI), and India's Digital Personal Data Protection Act (DPDP). Based on the determined territory, different instructions may be presented so different personal data is collected.

Additionally, different territories may offer different services, and specific instructions may be given for electronic device 102 to set up location-specific services. For example, a first electronic payment platform is given for setting up when the territory is the US, while a second electronic payment platform is given when the territory is Japan.

Note that machine learning models 172 may be trained using historical signals received by an electronic device and corresponding territory determinations and/or language selections in the prompts. These ground truth data may be used to adjust the parameters of machine learning models 172. The historical data with pairs of historical signals and corresponding language selections may be from earlier data of electronic device 102 (e.g., previous setup), earlier data of electronic devices that are the same type of electronic devices as electronic device 102, or earlier data of electronic devices that are different types but use similar signals for language selection. Once electronic device 102 establishes a connection with a network gateway device and has access to networks, electronic device 102 may download the historical data for training, and additionally/alternatively, pre-trained models may be downloaded from the Cloud to electronic device 102 based on training performed elsewhere.

While language determinator 150 is shown to include distinct circuitries/logic for territory determinator 152, territory-language mapping module 154, and machine learning models 172, some or all of them may be integrated into the same circuitries. Additionally, storage may be integrated within language determinator 150 as well, e.g., for storing historical data to train machine learning models and/or mapping between territory and language. These functional blocks, along with communications technology interfaces 110 to 112 and/or prompt interface 130, may be integrated into a system on a chip (SoC) in some embodiments.

### Incoming Signal Based Language Selection

As discussed, the received signals from a network form the basis to select a language to interact with an operator. The signals may be received through a wireline and/or wirelessly in radio or microwave.

Signaling in wireline communication technologies may be used to infer the physical territory in which an electronic device resides. For example, once the electronic device is connected to the Internet through one or more physical links (e.g., fiber optic, coaxial cable, Ethernet cable, twisted lines, power lines), it may obtain a public Internet Protocol (IP) address assigned by a Dynamic Host Configuration Protocol (DHCP) server. The public IP address may reveal the country, city, and even the Internet service provider (ISP) as the public IP address is assigned through IP geolocation, which assigns the IP address based on the physical region and ISP. Based on the geolocation information revealed by the public IP address, the electronic device may determine the physical territory and corresponding language for prompts as discussed.

Additionally or alternatively, an electronic device may receive a variety of signals in radio or microwave transmitted in different communications technologies, and physical territory information may be derived from these signals.

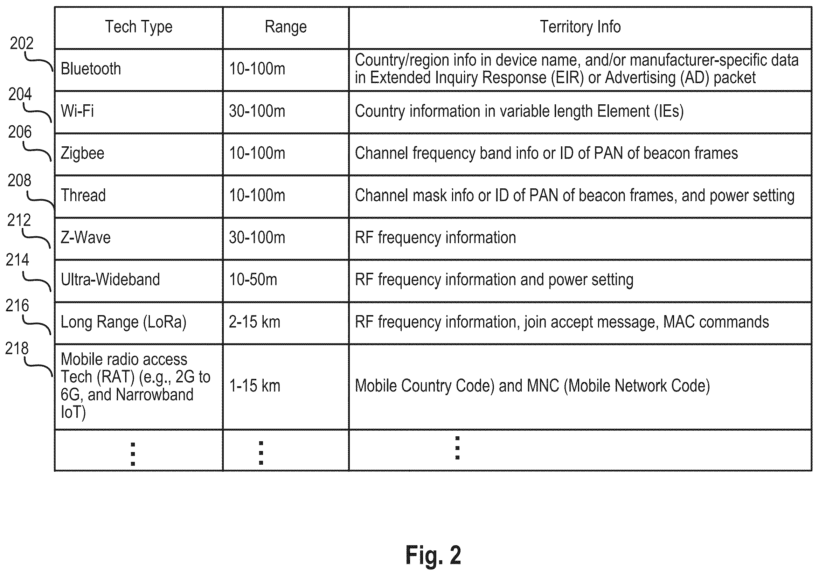

**Figure** 2 illustrates exemplary wireless communications technologies and the embedded territory information per some embodiments. These and other wireless communications technologies are commonly used by electronic devices for setup, and they thus offer examples of how to determine the physical territory in which an electronic device resides in some embodiments.

### Bluetooth

In some embodiments, signals are received through Bluetooth as shown at reference 202. Bluetooth is a short-range communications technology that typically operates up to 10 to 100 meters. An electronic device enters the pairing mode upon power-on by broadcasting signals for pairing, and a Bluetooth-enabled network gateway device may scan for such signals and pair with the device accordingly. For pairing, the gateway device provides an inquiry response to the electronic device upon receiving an inquiry request from the latter in some embodiments. Bluetooth technology is divided into two main categories: Bluetooth classic (basic rate (BR) and enhanced data rate (EDR) and Bluetooth Low Energy (BLE), where the former is for continuous, higher speed data transfer and the latter for lower power applications.

In Bluetooth classic, the inquiry response may include an Extended Inquiry Response (EIR) packet that is sent before paring actually begins to allow the electronic device to obtain additional details about the responding network gateway device. The EIR packet includes the device name (also referred to as local name) of the network gateway device, and many vendors add country codes (or another territory indication) in the device name to differentiate regional versions of their devices (e.g., Gateway _JP). Additionally, the EIR packet may include manufacturer-specific data, where the vendor may add a country code (or another territory indication).

In Bluetooth Low Energy (BLE), the network gateway device may broadcast advertising (AD) packets continuously. An AD packet also includes the device name and manufacturer-specific data that may reveal the territory of the network gateway device.

Additionally, some regions have set specific transmit (Tx) power levels for Bluetooth, e.g., European Telecommunications Standards Institute (ETSI) and Federal Communications Commission (FCC) set the max Tx power to be 20 dBm; Ministry of Industry and Information Technology (MIIT) in China sets the max Tx power to be 12 dBm; and Ministry of Internal Affairs and Communications (MIC) in Japan sets the max Tx power to be 4 dBm. Based on the power level indication in the received EIR or AD packet, the electronic device may infer which region it resides. For example, if the indicated max Tx power is 18 dBm, the network gateway device (and the electronic device nearby) cannot be in Japan or China. With added information from the device name and/or manufacturer-specific data in the packet, the electronic device may further narrow the territory determination.

### WiFi

In some embodiments, signals are received through WiFi as shown at reference 204. WiFi is a short-range communications technology that typically operates up to 30 to 100 meters. A network gateway device may act as an access point (AP) for WiFi and indicate its presence through broadcast beacon frames periodically. An electronic device may monitor and accept the beacon frames and connect to the corresponding network.

A WiFi beacon frame includes media access control (MAC) header fields, fixed parameters, and variable-length Information Element fields (IEs), as defined in standard such as the Institute of Electrical and Electronics Engineers (IEEE) 802.11-2020 and following amendments that define the enhanced beacon frame capabilities for roaming, security, efficiency and others. As defined, a country IE field within the variable-length IEs include a three-byte country code defined as ISO 3166-1 Alpha-2 country code that explicitly indicates the country/territory. Note that some territories of a country may have their unique country code different from that of the country. For example, Puerto Rico is a US territory, yet it has a country code (PR), different from the US country code (US). When an electronic device detects the country code PR, it may determine that Spanish is the preferred language, even though English is the preferred language in the US, as Spanish is the predominant language at home in Puerto Rico.

### Zigbee

In some embodiments, signals are received through Zigbee as shown at reference 206. Zigbee is a short-range communications technology that typically operates up to 10 to 100 meters. A network gateway device may send beacon frames each containing (1) channel information, where certain frequency bands are country/territory specific; and (2) personal area network (PAN) identifier (ID), which may be set based on country/territory the network gateway device operates.

For example, a network gateway device may operate at a frequency band (i) in the range of 902 to 928 MHz (channels 1 to 10) in North America, (ii) at 868 MHz (Channel 0) in Europe, or (iii) in the range of 2,400 to 2,483.5 MHz (channels 11 to 26) globally. If the beacon frames are at the frequency band (i) or (ii), the electronic device may determine the physical territory at the continent level.

Additionally, some utility companies or IoT deployments use a fixed PAN ID for all devices in a region, e.g., national smart meter networks. Furthermore, network gateway devices may use Zigbee Smart Energy (SE) and Home Automation (HA) profiles that specify PAN ID ranges per country or continent.

From (1) the channel information and (2) PAN ID of the Zigbee beacon frames, an electronic device may determine the physical territory in which it resides, based on which one or more preferred languages may be selected.

### Thread

In some embodiments, signals are received through Thread as shown at reference 208. Thread is a short-range communications technology that typically operates up to 10 to 100 meters. As an IPv6-based low-power wireless networking protocol for IoT, Thread has no explicit "country code" field like in Wi-Fi. However, country or regional regulatory settings can be inferred through radio frequency usage and network configuration. The beacon frame from a Thread network gateway device contains (1) a channel mask indicates allowed frequency channels that are territory dependent, and (2) PAN ID, which is a network-specific ID to differentiate thread networks, and/or extended PAN ID that is a globally unique ID to differentiate thread networks. The PAN ID and extended PAN ID may be assigned based on region as well.

The channel masks differ by region, for example, North America uses channels 11 to 26 between 2405 to 2480 MHz, and the corresponding channel mask is 0x07FFF800, while China uses channels 16 to 22 only between 2425 to 2465 MHz and the corresponding channel mask is 0x0007F800.

From the (1) channel mask and (2) PAN ID and/or extended PAN ID, an electronic device may determine the physical territory in which it resides, based on which one or more preferred languages may be selected.

### Z-Wave

In some embodiments, signals are received through Z-wave as shown at reference 212. Z-Wave is a short-range communications technology used primarily for residential and commercial building automation and typically operates up to 30 to 100 meters. Z-Wave operates on different sub-GHz frequencies depending on the country/territory: in the U.S. and Canada, Z-Wave operates at 908.4 MHz or 916 MHz; in Europe and China, 868.4 MHz or 869.85 MHz; in Japan, 922.5 MHz, 923.9 MHz, and 926.0 MHz; and other countries have different frequencies.

Thus, based on the frequency, an electronic device may derive territory information for preferred language selection.

### Ultra-Wideband (UWB)

In some embodiments, signals are received through UWB as shown at reference 214. UWB uses a very low energy level for short-range, high-bandwidth communication over a large portion of the radio spectrum and typically operates up to 10 to 50 meters. UWB operates in different frequency bands depending on the region, and country-specific regulations dictate power limits, allowed channels, and signal parameters.

For example, allowed UWB frequency range is 3.1 to 10.6 GHz in the US, 6.0 to 8.5 GHz in Europe, 7.2 to 8.2 GHz in China, and 3.4 to 4.8 GHz in Japan. The frequency range of a UWB gateway device (e.g., indicated by PHY Header (PHR) & MAC Command Frames) as confirmed by an electronic device then provides a territory indication to the electronic device.

Additionally, UWB devices have region dependent maximum transmit (Tx) power limits (similar to Bluetooth) and region dependent pulse repetition frequency (e.g., to comply with interference limits), and this information, found in PHR & extended MAC IE and PHR & Ranging Exchange Frames, may indicate the residing territory as well.

Thus, these indicators may be used to select the preferred language for the prompts to interact with an operator of the corresponding electronic device.

### Long Range (LoRa)

In some embodiments, signals are received through LoRa as shown at reference 216. LoRa uses license-free sub-gigahertz radio frequency bands and typically operates up to 2 to 15 km. LoRa operates in different frequency bands depending on the region as regional regulations dictate the allowable frequency bands.

For example, the LoRa frequency band is 902 to 928 MHz in the US, 867 to 870 MHz in Europe, 470 to 510 MHz and 779 to 787 MHz in China, 920 to 923 MHz in Japan, 865 to 867 MHz in India, and 915 to 928 MHz in Australia. Based on the network gateway device frequency band assignment, indicated in the channel frequency list (CFList) in the join accept message, the electronic device may determine the territory in which it resides. Additionally, the MAC commands from a LoRa network gateway device may indicate the adaptive data rate parameters and duty cycle limits, both of which vary by country/territory, and may indicate the country/territory that the electronic device resides and may be used to select one or more preferred languages accordingly.

### Mobile Radio Access Technologies (RATs)

In some embodiments, signals are received through a variety of mobile radio access technologies (RATs) as shown at reference 218. RATs typically operate up to 1 to 15 km. Mobile RATs refer to the various wireless communication technologies used in mobile networks to enable connectivity between user devices (e.g. a variety of electronic devices including IoT devices) and the cellular network infrastructure. Mobile RATs are standardized by the 3rd Generation Partnership Project (3GPP), IEEE, and other standards organizations.

Mobile RATs include the 2^{nd} Generation (2G), the 3^{rd} Generation (3G), the 4^{th} Generation (4G) that is also referred to as Long Term Evolution (LTE), the 5^{th} Generation (5G) that is also referred to as New Radio (NR), and the 6^{th} Generation (6G). These mobile RATs operate from earlier cellular frequency bands in the range of 850 MHz to 1.9 GHz in 2G to the range of 100 GHz to 1 THz in 6G.

NB-IoT, a Low Power Wide Area (LPWA) technology designed specifically for IoT applications, and it operates in similar cellular frequency bands but uses significantly narrower bandwidth (e.g., 200 kHz).

An electronic device may scan for wireless signals from any of these mobile RATs upon power-on. A RAT network gateway device (e.g., a base station such as an eNB or gNB) may broadcast system information (SI) messages that indicate a mobile country code (MCC) and a mobile network code (MNC). The MCC code is a three-digit code that identifies the country of origin of the gateway device and the network, and it is assigned by the International Telecommunication Union (ITU). For example, 310 is the US, 262 is Germany, and 404/405/406 is India. The MNC code is a two- or three-digit code that identifies the specific mobile network operator (MNO) within a country, and it is assigned by the national regulatory authority of each country. For example, 310-260 is T-Mobile in the US, 262-01 is Deutsche Telekom in Germany, and 406-001 is Reliance Jio in India. The MCC code and MNC code are available for any of the 2G to 6G cellular networks and NB-IoT networks.

Based on the MCC code and MNC code, the receiving electronic device may derive territory information for preferred language selection.

While Figure 2 illustrates a number of examples of wireless technologies through which an electronic device may derive territory information, the list is for illustration and not exhaustive, and other wireless technologies are also available to be used to determine the territory information. Based on the territory information, the electronic device may determine the preferred one or more languages to interact with an operator.

Note that an electronic device may support multiple wireline and wireless communications technologies, as shown in Figure 1, and the electronic device determines the territory based on the variety of indications and hints regarding continent, country, province, communities, and the like. The electronic device may select the most narrowly determined territory for the preferred language selection. For example, if the territory is determined to be North America based on a first wireless technology, Canada based on a second wireless technology, Quebec based on a third wireless technology, and the Cree Nation of Quebec based on a fourth wireless technology, the last is used as the determined territory, and the indigenous language of Cree is then selected as the preferred language for interacting with the operator, even though French or English is spoken in other region near the determined territory.

### Setting up Electronic Device per Some Embodiments

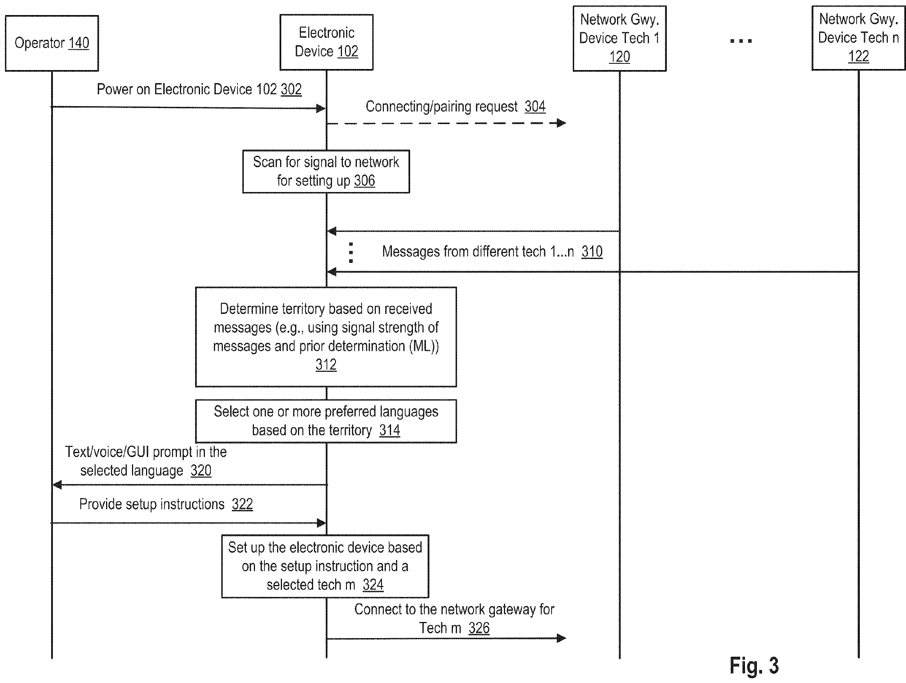

**Figure 3** illustrates the flow of setting up an electronic device with an automatically selected language per some embodiments. The entities in the setup process are discussed herein relating to Figure 1. The setup process starts with the power-on of electronic device 102 at reference 302. The operator 140 may cause the power-on by turning on a power switch, or electronic device 102 is powered on upon a power cord connects electronic device 102 with a power source.

Electronic device 102 may be in a factory default setting without connection with any network upon the power-on. For example, electronic device 102 comes from a vendor and has not been provisioned at the current physical location. Alternatively, electronic device 102 may have gone through a reset that removes customized settings on the electronic device 102 by operator 140 or another operator.

In some embodiments, electronic device 102 broadcasts one or more connecting or pairing requests 304 (e.g., periodically) through its network links and/or wirelessly upon the power-on. Electronic device 102 scans signals received on its network links and/or wirelessly to extract messages, based on which electronic device 102 detects the presence of network implemented in one or more communications technologies.

Network gateway devices 120 to 122 implement respectively communications technologies and send out signals containing messages to provide network information at references 310 so that electronic device 102 may be paired with or connect to the respective network gateway devices.

Electronic device 102 determines at reference 312 the territory in which electronic device 102 resides based on the received messages in a set of communications technologies. Each message from a communication technology may provide an indication of a territory, and the corresponding set of indications are then used to determine the location. The territory indications from a variety of communication technologies are discussed in more details in the Section relating to Figure 2.

In some embodiments, the most represented territory in the set of indications is determined to be the location. While all the indications are given equal weight in some embodiments, the received messages are ranked based on the corresponding signal strength in alternative embodiments, and the territory indicated by a message extracted from a stronger signal is given a higher weight. The territory with the highest overall score based on the weighted or unweighted approach is determined to be the location in some embodiments.

The signal strength is indicated by a variety of metrics based on one or more messages received from the corresponding network gateway devices. For example, the signal strength may be indicated by Received Signal Strength Indicator (RSSI), a measurement of the power level of a received signal in wireless communications system implementing communications technologies such as Bluetooth, WiFi, Zigbee, LoRa, and mobile RATs. While RSSI is still used in 5G networks, Reference Signal Received Power (RSRP), Reference Signal Received Quality (RSRQ), and Signal-to-Interference-plus-Noise Ratio (SINR) as measurements of the quality and strength of a wireless connection are used more often.

Additionally, when indications from different technologies conflict with each other, the ones with highest signal strength are favored as well as the ones with most represented territories.

In some embodiments, machine learning is implemented to make the territory determination, where the corresponding machine learning models have been trained using historical data as discussed herein above. The machine learning models may determine the electronic device location in light of the conflicting indications.

Once the territory is determined, one or more preferred languages is selected based on the territory at reference 314. Electronic device 102 then provides one or more prompts in the selected language (or languages) to operator 140 at reference 322. The prompts may be text messages, or graphics on a display or voice through a speaker in the preferred languages. Operator 140 then provides setup instructions based on the prompts at reference 322. In some embodiments, specific instructions are provided to compliance with laws/regulations for the particular determined territory.

At reference 324, electronic device 102 is to set itself up based on the setup instructions and a selected communications technology for connecting to a corresponding network gateway device at reference 324. At reference 326, electronic device 102 connects to the network gateway device and prepares for use by operator 140.

In some embodiments, the interactions between operator 140 and electronic device 102 are in verbal communications only, after the preferred language is selected. For example, two or more preferred languages are selected and electronic device 102 then greets operator 140 with the multiple preferred languages, based on the response by operator 140 in a language within the multiple preferred languages, electronic device 102 then uses the single preferred language in the following interactions.

In some embodiments, when electronic device 102 fails to find the territory (e.g., the received messages indicating too many conflicting territories), fails to find at least one preferred language, or determines that the preferred language is incorrect based on the interactions with operator 140 (e.g., after speaking the prompt in the preferred language, operator 140 responds with another language), electronic device 102 may implement a recovery mechanism. For example, electronic device 102 may restart the process (e.g., repeating the operations starting at reference 304), pick a second territory that was determined earlier not as good as the first territory (e.g., instead of the Cree Nation of Quebec, electronic device 102 selects the province of Quebec), pick a second preferred language that was selected earlier. Furthermore, electronic device 102 may present all the language options to operator 140 so operator 140 may manually select the preferred language. The selection and the detected messages in the variety of communications technologies are then saved as historical data to train machine learning models later for automatic language selection.

The disclosed embodiments offer seamless compatibility with multiple wireless communications standards and ensuring applicability of language selections in a variety of operating environments and in all locations. The operator does not need to provide any input for the automatic language selection, thus the prompts in the preferred language present a plug-and-play convenience that makes the initial user experience pleasant.

### Operations per Some Embodiments

The operations in the flow diagrams may be described with reference to the exemplary embodiments of the other figures. However, it should be understood that the operations of the flow diagrams can be performed by disclosed embodiments other than those discussed with reference to the other figures, and the disclosed embodiments discussed with reference to these other figures can perform operations different than those discussed with reference to the flow diagrams.

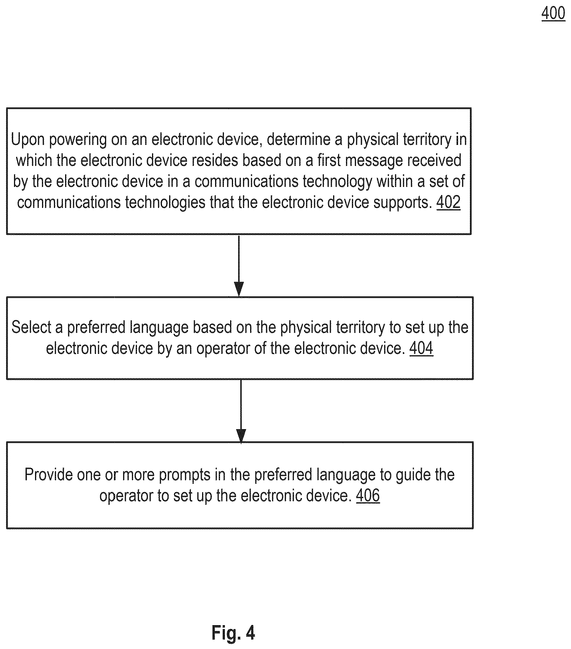

**Figure** 4 is a flow diagram illustrating the operations of automatic language selection by an electronic device without manual input per some embodiments. Method 400 may be performed by an electronic device such as electronic device 102 in some embodiments.

At reference 402, upon powering on an electronic device, determining a physical territory in which the electronic device resides based on a first message received by the electronic device in a communications technology within a set of communications technologies that the electronic device supports. At reference 404, a preferred language is selected based on the physical territory to set up the electronic device by an operator of the electronic device. At reference 406, one or more prompts are provided in the preferred language to guide the operator to set up the electronic device.

In some embodiments, the first message is received in response to a request to connect transmitted by the electronic device.

In some embodiments, the first message is received wirelessly or through a link connected to the electronic device.

In some embodiments, the first message is selected from a plurality of messages received by the electronic device upon powering on, and wherein the first message is selected from messages received wirelessly based on signal strength measured by the electronic device.

In some embodiments, the signal strength measured by the electronic device is indicated by received signal strength indicator, reference signal received power, reference signal received quality, or signal-to-interference-plus-noise ratio.

In some embodiments, physical territory is determined further based on a second message in a second communications technology within the set of communications technologies, and wherein both of the first and second messages indicate the physical territory. For example, both messages may indicate Canada.

In some embodiments, the preferred language is selected further based on another physical territory determined based on a second message in a second communications technology within the set of communications technologies. The two messages may not indicate the identical physical territory in some embodiments. For example, a first message may indicate North America and the second message may indicate Canada, the narrower territory, Canada, is determined to be the location as the two indications are consistent and imply the same physical territory.

In some embodiments, the communications technology is mobile radio access technology (RAT), and wherein the physical territory is determined based on a first code and a second code in the first message, wherein the first code indicates the physical territory and the second code indicates a provider of a network implementing the communications technology, and the provider of the network is determined to operate in the physical territory.

In some embodiments, the communications technology is WiFi, and wherein the physical territory is determined based on a country code indicated in an Information Element within a beacon frame received by the electronic device.

In some embodiments, the communications technology is Bluetooth, and wherein the physical territory is determined based on country or region information in a device name field or manufacturer-specific data in an extended inquiry response (EIR) packet or an advertising packet.

In some embodiments, the communications technology is Zigbee, and wherein the physical territory is determined based on channel information or an identifier of personal area network of beacon frames received by the electronic device.

In some embodiments, the one or more prompts include text messages, graphic interface display, or voice messages in the preferred language.

### Operating Environments and Implementations

The embodiments discussed herein may be implemented in an electronic device. An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, solid state drives, read only memory (ROM), flash memory devices, phase change memory) and machine-readable transmission media (also called a carrier) (e.g., electrical, optical, radio, microwave, acoustical, or other form of propagated signals - such as carrier waves, infrared signals). Thus, an electronic device (e.g., a computer) includes hardware and software, such as a set of one or more processors (e.g., of which a processor is a microprocessor, controller, microcontroller, central processing unit, digital signal processor, application specific integrated circuit (ASIC), field programmable gate array (FPGA), other electronic circuitry, a combination of one or more of the preceding) coupled to one or more machine-readable storage media to store code for execution on the set of processors and/or to store data. For instance, an electronic device may include non-volatile memory containing the code since the non-volatile memory can persist code/data even when the electronic device is turned off (when power is removed). When the electronic device is turned on, that part of the code that is to be executed by the processor(s) of the electronic device is typically copied from the slower non-volatile memory into volatile memory (e.g., dynamic random-access memory (DRAM), static random-access memory (SRAM)) of the electronic device. Typical electronic devices also include a set of one or more physical network interface(s) (NI(s)) to establish network connections (to transmit and/or receive code and/or data using propagating signals) with other electronic devices. For example, the set of physical NIs (or the set of physical NI(s) in combination with the set of processors executing code) may perform any formatting, coding, or translating to allow the electronic device to send and receive data whether over a wired and/or a wireless connection. In some embodiments, a physical NI may comprise radio or microwave circuitry capable of (1) receiving data from other electronic devices over a wireless connection and/or (2) sending data out to other devices through a wireless connection. This radio or microwave circuitry may include transmitter(s), receiver(s), and/or transceiver(s) suitable for radio or microwave frequency communication. The radio or microwave circuitry may convert digital data into a radio or microwave signal having the proper parameters (e.g., frequency, timing, channel, bandwidth, and so forth). The radio or microwave signal may then be transmitted through antennas to the appropriate recipient(s). In some embodiments, the set of physical NI(s) may comprise network interface controller(s) (NICs), also known as a network interface card, network adapter, or local area network (LAN) adapter. The NIC(s) may facilitate connecting the electronic device to other electronic devices allowing them to communicate with wire through plugging in a cable to a physical port connected to a NIC. One or more parts of an embodiment may be implemented using different combinations of software, firmware, and/or hardware.

A communications network includes one or more wireless and/or wireline networks, and it allows a user of a digital camera system to control one or more digital cameras remotely across networks such as wide area networks (WANs), metropolitan area networks (MAN), local area networks (LANs), internet area networks (IANs), campus area networks (CANs), and virtual private networks (VPNs). Entities in the communications networks, such as mobile devices and digital cameras, may be given Internet Protocol (IP) addresses for identification, and the IP addresses may be IP Version 4 (IPv4) or IP Version 6 (IPv6).

The electronic device may access a wireless communication network and receive services from the wireless communication network. The electronic device may be a user equipment (UE), which may be a subscriber station, a portable subscriber station, a mobile station (MS), or an access terminal (AT).

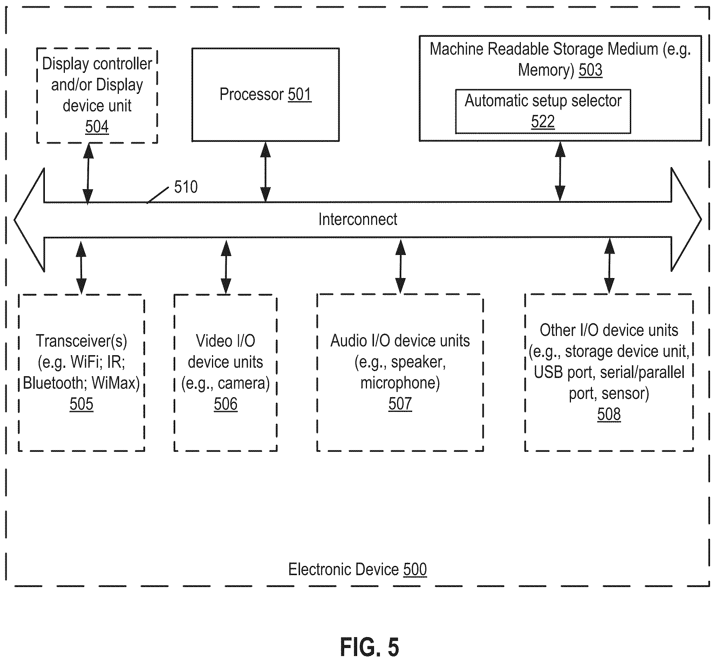

**Figure 5** is a block diagram illustrating an electronic device that may implement automatic language selection per some embodiments. The electronic device 500 may be electronic device 102 in some embodiments. The electronic device 500 can include many different components. These components can be implemented as integrated circuits (ICs), portions thereof, discrete electronic devices, or other modules adapted to a circuit board such as a motherboard or add-in card of a computing system, or as components otherwise incorporated within a chassis of the computing system. Note also that electronic device 500 is intended to show a high-level view of many components of the computing system. However, it is to be understood that additional components may be present in certain implementations and furthermore, different arrangement of the components shown may occur in other implementations.

In some embodiments, the electronic device 500 includes a processor 501, a machine-readable storage medium 503, and optionally device units 504-508 that are interconnected via a bus or an interconnect 510. Processor 501 may represent a single processor or multiple processors with a single processor core or multiple processor cores included therein. Processor 501 may represent one or more general-purpose processors such as a microprocessor, a central processing unit (CPU), or processing device. More particularly, the processor 801 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processor 501 may also be one or more special-purpose processors such as an application specific integrated circuit (ASIC), a cellular or baseband processor, a field programmable gate array (FPGA), a digital signal processor (DSP), a network processor, a graphics processor, a network processor, a communications processor, a cryptographic processor, a co-processor, an embedded processor, or any other type of logic capable of processing instructions.

Processor 501 may communicate with machine-readable storage medium 503, which in an embodiment can be implemented via multiple memory devices to provide for a given amount of system memory. The machine-readable storage medium 503 may include one or more volatile storage (or memory) devices such as random-access memory (RAM), dynamic RAM (DRAM), synchronous DRAM (SDRAM), static RAM (SRAM), or other types of storage devices. The machine-readable storage medium 503 may store information including sequences of instructions that are executed by processor 801, or any other device units. For example, executable code and/or data of a variety of operating systems, device drivers, firmware (e.g., input output basic system or BIOS), and/or applications can be loaded in the machine-readable storage medium 503 and executed by processor 801. An operating system can be any kind of operating systems, such as, for example, Windows^{®} operating system from Microsoft^{®}, Mac OS^{®}/iOS^{®} from Apple, Android^{®} from Google^{®}, Linux^{®}, Unix^{®}, or other real-time or embedded operating systems such as VxWorks.

The machine-readable storage medium 503 (in some embodiments the storage medium is non-transitory) contains automatic setup selector 522, which may perform the operations in embodiments discussed above. For example, automatic setup selector 522 may automatically select the language to interact with an operator of electronic device 500, additionally, automatic setup selector 522 may automatically select location-specific services based on territorial determination as discussed herein in some embodiments.

Electronic device 500 may optionally include input/output (I/O) devices such as the device units 504-508, including display control and/or display device unit 504, wireless transceiver(s) 505, video I/O device unit(s) 506, audio I/O device unit(s) 507, and other I/O device units 508 as illustrated. The wireless transceiver 505 may be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, or a combination thereof. Electronic device 500 may also include an ultrasound device unit (not shown) for transmitting a conference session code.

The video I/O device unit 506 may include an imaging processing subsystem (e.g., a camera), which may include an optical sensor, such as a charged coupled device (CCD) or a complementary metal-oxide semiconductor (CMOS) optical sensor, utilized to facilitate camera functions, such as recording photographs and video clips and conferencing. An audio I/O device unit 507 may include a speaker and/or a microphone to facilitate voice-enabled functions, such as voice recognition, voice replication, digital recording, and/or telephony functions. Other optional devices 608 may include a storage device (e.g., a hard drive, a flash memory device), universal serial bus (USB) port(s), parallel port(s), serial port(s), a printer, a network interface, a bus bridge, sensor(s) (e.g., a motion sensor such as an accelerometer, gyroscope, a magnetometer, a light sensor, compass, a proximity sensor, etc.), or a combination thereof. The optional devices 608 may further include certain sensors coupled to the interconnect 810 via a sensor hub (not shown), while other devices such as a keyboard or thermal sensor may be controlled by an embedded controller (not shown), depending upon the specific configuration or design of the electronic device 500. These I/O device units, implemented in circuitry, allow electronic device 500 to interact with an operator of electronic device more efficiently.

Note that while electronic device 500 is illustrated with various components, it is not intended to represent any particular architecture or manner of interconnecting the components; as such details are not germane to the disclosed embodiments. It will also be appreciated that an electronic device having fewer components or perhaps more components may also be used with the embodiments. For example, some entities shown in electronic device 102 may be implemented in electronic device 500 as well.

Some portions of the preceding detailed descriptions have been presented in terms of algorithms and symbolic representations of operations on data bits within a computer memory. These algorithmic descriptions and representations are the ways used by those skilled in conferencing technology to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a conference device, or similar electronic computing device, that manipulates and transforms data represented as physical (electronic) quantities within the conference device's registers and memories into other data similarly represented as physical quantities within the conference device's memories or registers or other such information storage, transmission or display devices.

### Terms

References in the specification to "one embodiment," "an embodiment," "an example embodiment," and so forth, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The description and claims may use the terms "coupled" and "connected," along with their derivatives. These terms are not intended as synonyms for each other. "Coupled" is used to indicate that two or more elements, which may or may not be in direct physical or electrical contact with each other, co-operate or interact with each other. "Connected" is used to indicate the establishment of wireless or wireline communication between two or more elements that are coupled with each other. A "set," as used herein can refer to any whole number of items including one item.

The terms "module," "logic," and "unit" used in the present application, may refer to a circuit for performing the function specified. In some embodiments, the specified function may be performed by a circuit in combination with software such as by software executed by a general-purpose processor.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessors or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according to one or more embodiments of the present disclosure.

The term unit may have conventional meaning in the field of electronics, electrical devices, and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method comprising:
upon powering on an electronic device, determining a physical territory in which the electronic device resides based on a first message received by the electronic device in a communications technology within a set of communications technologies that the electronic device supports;
selecting a preferred language based on the physical territory to set up the electronic device by an operator of the electronic device; and
providing one or more prompts in the preferred language to guide the operator to set up the electronic device.

2. An electronic device, comprising:
a processor and machine-readable storage medium that provides instructions that, when executed by the processor, are capable of causing the processor to perform:
upon powering on the electronic device, determining a physical territory in which the electronic device resides based on a first message received by the electronic device in a communications technology within a set of communications technologies that the electronic device supports;
selecting a preferred language based on the physical territory to set up the electronic device by an operator of the electronic device; and
providing one or more prompts in the preferred language to guide the operator to set up the electronic device.

3. A non-transitory machine-readable storage medium that provides instructions that, when executed by a processor, are capable of causing the processor to perform:
upon powering on an electronic device, determining a physical territory in which the electronic device resides based on a first message received by the electronic device in a communications technology within a set of communications technologies that the electronic device supports;
selecting a preferred language based on the physical territory to set up the electronic device by an operator of the electronic device; and
providing one or more prompts in the preferred language to guide the operator to set up the electronic device.

4. The method of claim 1, wherein the first message is received in response to a request to connect transmitted by the electronic device.

5. The method of claim 1, wherein the first message is received wirelessly or through a link connected to the electronic device.

6. The method of claim 1, wherein the first message is selected from a plurality of messages received by the electronic device upon powering on, and wherein the first message is selected from messages received wirelessly based on signal strength measured by the electronic device.

7. The method of claim 6, wherein the signal strength measured by the electronic device is indicated by received signal strength indicator, reference signal received power, reference signal received quality, or signal-to-interference-plus-noise ratio.

8. The method of claim 1 or the electronic device of claim 2, wherein the physical territory is determined further based on a second message in a second communications technology within the set of communications technologies, and wherein both of the first and second messages indicate the physical territory.

9. The method of claim 1 or the electronic device of claim 2, wherein the preferred language is selected further based on another physical territory determined based on a second message in a second communications technology within the set of communications technologies.

10. The method of claim 1 or the electronic device of claim 2 or the non-transistory machine readable storage medium of claim 3, wherein the communications technology is mobile radio access technology (RAT), and wherein the physical territory is determined based on a first code and a second code in the first message, wherein the first code indicates the physical territory and the second code indicates a provider of a network implementing the communications technology, and the provider of the network is determined to operate in the physical territory.

11. The method of claim 1 or the electronic device of claim 2, wherein the communications technology is WiFi, and wherein the physical territory is determined based on a country code indicated in an Information Element within a beacon frame received by the electronic device.

12. The method of claim 1 or the electronic device of claim 2, wherein the communications technology is Bluetooth, and wherein the physical territory is determined based on country or region information in a device name field or manufacturer-specific data in an extended inquiry response (EIR) packet or an advertising packet.

13. The method of claim 1, wherein the communications technology is Zigbee, and wherein the physical territory is determined based on channel information or an identifier of personal area network of beacon frames received by the electronic device.

14. The method of claim 1, wherein the one or more prompts include text messages, graphic interface display, or voice messages in the preferred language.
